# EUROPÄISCHE PATENTSCHRIFT

(11) **EP 2 802 757 B1**
(45) Veröffentlichungstag und Bekanntmachung des Hinweises auf die Patenterteilung: **30.05.2018**
(21) Anmeldenummer: 13703760.2
(22) Anmeldetag: 01.02.2013
(51) Int. Cl.: F02C 6/04, F02C 6/14

(54) **GASKRAFTWERK**
GAS POWER PLANT
CENTRALE À GAZ

(30) Priorität: 20.02.2012 DE 102012202575
(43) Veröffentlichungstag der Anmeldung: 19.11.2014
(73) Patentinhaber: Siemens Aktiengesellschaft, 80333 München (DE)
(72) Erfinder: HIRSCHFELDER, Oliver, 90482 Nürnberg (DE); BRUNHUBER, Christian, 91275 Auerbach (DE); LENK, Uwe, 08064 Zwickau (DE); MENAPACE, Wolfgang, 91052 Erlangen (DE); VORTMEYER, Nicolas, 91054 Erlangen (DE)
(86) Internationale Anmeldenummer: PCT/EP2013/052018
(87) Internationale Veröffentlichungsnummer: WO 2013/124135

(56) Entgegenhaltungen:
- EP-A1- 0 549 930
- WO-A1-2011/053411
- US-A1- 2008 148 734

## Beschreibung

Die vorliegende Erfindung betrifft ein Verfahren zum Betrieb eines Gaskraftwerks, umfassend eine Gasturbine, welche mit einem Generator über eine Achse verbunden ist, wobei der Generator dazu ausgebildet ist, auch als Motor betrieben zu werden. Weiterhin betrifft die Erfindung ein solches Gaskraftwerk.

Aufgrund der zunehmend erfolgenden Umstellungen im öffentlichen elektrischen Versorgungsnetzwerk hin zu einer Versorgung mit dezentralisiert angeordneten erneuerbaren Stromerzeugungsquellen ist zunehmend eine verbesserte Regulierung bzw. geeignete Zwischenspeicherung von elektrischer Energie notwendig, um die Stromversorgungsnetzwerke auch bei stark fluktuierender Nachfrage bzw. Stromeinspeisungen stabil betreiben zu können.

Insbesondere die Zwischenspeicherung von elektrischer Energie in Form von mechanischer Energie, beispielsweise mittels Druck bzw. einer Änderung der potentiellen Energie eines Speichermediums, eignet sich besonders zur kurz- und mittelfristigen Energiespeicherung. Hierbei werden typischerweise die im öffentlichen Stromversorgungsnetzwerk zur Verfügung stehenden elektrischen Überschussenergiemengen dazu verwandt, das Speichermedium hinsichtlich seines mechanischen Energiezustandes zu verändern. Bei Pumpspeicherkraftwerken wird bspw. Wasser auf ein höher gelegenes potentielles Energieniveau mittels geeigneter Fördervorrichtungen angehoben, um zeitversetzt mittels des auf sein ursprüngliches Niveau fallenden Wassers Turbinen und Generatoren zur Stromerzeugung anzutreiben. Der Strom kann erneut in das öffentliche Stromversorgungsnetz eingespeist werden und kann vor allem zu Zeiten bereit gestellt werden, zu welchen eine erhöhter Strom- bzw. Regulierungsbedarf besteht.

Nachteilig an den herkömmlichen Speicherkraftwerkstechnologien ist jedoch deren örtliche Beschränkung hinsichtlich ihres möglichen Einsatzes. So können etwa Pumpspeicherkraftwerke in den meisten Fällen nur dort eingesetzt werden, wo die örtliche Topographie geeignete Höhenunterschiede aufweist. Zusätzlich zu diesen Nachteilen wird vielfach auch ein unerwünschter Eingriff in das Erscheinungsbild von Landschaft und Natur beklagt. Vor allem durch die notwendige Errichtung von großen baulichen Vorrichtungen über Tage können solche Nachteile kaum vermieden werden.

Aufgrund dieser Nachteile der herkömmlichen Technologien zur Zwischenspeicherung von elektrischer Energie ist eine verbesserte technische Lösung erforderlich. Insbesondere sollte eine solche Lösung die Überführung von elektrischem Strom aus dem öffentlichen Versorgungsnetz in eine geeignete Form der speicherbaren Energie mittels wenigstens teilweise bereits vorhandener Kraftwerkstechnologie ermöglichen.

Einen Lösungsansatz hierzu kann die EP 0 549 930 A1 vermitteln, welche eine Gasturbogruppe beschreibt, die je nach Betriebszustand auch zur Verdichtung von Luft dient. Der Verdichtungsvorgang kann durch einen als Motor betriebenen Generator mit Energie versorgt werden, wobei die verdichtete Luft in einer Luftspeicherkaverne zeitlich bevorratet wird. Bei Betrieb der Gasturbogruppe zur elektrischen Energieerzeugung kann anschließend die verdichtete Luft aus der Luftspeicherkaverne und damit die darin gespeicherte Druckenergie wieder genutzt werden.

Nachteilig an dieser Technologie aus dem Stand der Technik ist aber wiederrum der große technische Aufwand, welcher insbesondere zur Bereitstellung einer Luftspeicherkaverne betrieben werden muss. Weiter sind auch zahlreiche bauliche Änderungen erforderlich zur isolierten Nutzung des Verdichters der Gasturbogruppe und zur vorteilhaften Ableitung der verdichteten Luft in die Luftspeicherkaverne.

Insofern stellt es sich als technisch besonders wünschenswert heraus, ein Verfahren vorzuschlagen, welches auf bereits vorhandenen Kraftwerkstechnologien basierend, ermöglicht, dass Kraftwerke durch lediglich geringe und wenig kostenintensive Änderungen soweit umgerüstet werden können, dass sie nicht nur für die Erzeugung von elektrischem Strom sondern auch für die Bereitstellung von geeigneten Formen von speicherbaren Energien geeignet sind. Insbesondere soll auch ein Verfahren zur Bereitstellung von speicherbarer Energie vorgeschlagen werden, das verhältnismäßig geringere Eingriffe in Natur und Umwelt erlaubt, bzw. diese vollständig vermeidet. Zudem soll die Speicherung von elektrischer Energie verhältnismäßig flexibel erfolgen können.

Erfindungsgemäß wird diese Aufgabe durch ein Verfahren gemäß Patentansprüchen 1 und 2 sowie durch ein Gaskraftwerk gemäß Patentansprüchen 13 und 14 gelöst.

Insbesondere wird diese Aufgabe durch ein Verfahren zum Betrieb eines Gaskraftwerks gelöst, umfassend eine Gasturbine, welche eine Kompressorstufe sowie eine Turbinenstufe aufweist, und mit einem Generator über eine Achse verbunden ist, wobei der Generator dazu ausgebildet ist, auch als Motor betrieben zu werden, welches Verfahren folgende Schritte umfasst:
- Betreiben des Generators als Motor zum rotatorischen Betrieb der Achse;
- gleichzeitiges Ableiten des aus der Turbinenstufe austretenden Gasstroms und
- Zuleiten dieses Gasstroms an einen ersten Wärmetauscher zur Übertragung von thermischer Energie aus dem Gasstrom auf ein Wärmetauscherfluid;
- Zuführen des Wärmetauscherfluids an einen Thermospeicher;

Weiterhin wird diese Aufgabe durch Verfahren zum Betrieb eines Gaskraftwerks gelöst, umfassend eine Gasturbine, welche eine Kompressorstufe sowie eine Turbinenstufe aufweist, und mit einem Generator über eine Achse verbunden ist, wobei der Generator dazu ausgebildet ist, auch als Motor betrieben zu werden, welches Verfahren folgende Schritte umfasst:
- Betreiben des Generators als Motor zum rotatorischen Betrieb der Achse;
- gleichzeitiges Ableiten des aus der Turbinenstufe austretenden Gasstroms und
- Zuleiten dieses Gasstroms an einen ersten Wärmetauscher zur Übertragung von thermischer Energie aus dem Gasstrom auf ein Wärmetauscherfluid;
- Übertragen von thermischer Energie des Wärmetauscherfluids an ein Wärmespeicherfluid, welches Wärmespeicherfluid in einem weiteren Schritt einem Thermospeicher zugeführt wird.

Weiterhin wird diese Aufgabe durch ein Gaskraftwerk gelöst, umfassend eine Gasturbine, welche eine Kompressorstufe sowie eine Turbinenstufe aufweist, und mit einem Generator über eine Achse verbunden ist, wobei der Generator dazu ausgebildet ist, auch als Motor betrieben zu werden,
weiterhin umfassend eine Gasleitungsvorrichtung, welche mit der Turbinenstufe derart zusammen wirkt, dass ein Gasstrom, welcher aus der Turbinenstufe austritt, abgeleitet und einem ersten Wärmetauscher zugeleitet wird, wobei der Wärmetauscher dazu ausgebildet ist, thermische Energie aus dem Gasstrom zu entnehmen und auf ein Wärmetauscherfluid zu übertragen, welches in einem Thermospeicher zur Zwischenspeicherung eingeleitet werden kann.

Überdies wird diese Aufgabe durch ein Gaskraftwerk gelöst, umfassend eine Gasturbine, welche eine Kompressorstufe sowie eine Turbinenstufe aufweist, und mit einem Generator über eine Achse verbunden ist, wobei der Generator dazu ausgebildet ist, auch als Motor betrieben zu werden,
weiterhin umfassend eine Gasleitungsvorrichtung, welche mit der Turbinenstufe derart zusammen wirkt, dass ein Gasstrom, welcher aus der Turbinenstufe austritt, abgeleitet und einem ersten Wärmetauscher zugeleitet wird, wobei der Wärmetauscher dazu ausgebildet ist, thermische Energie aus dem Gasstrom zu entnehmen und auf ein Wärmetauscherfluid zu übertragen, welches in einem zweiten Wärmetauscher wenigstens einen Teil der thermischen Energie an ein Wärmespeicherfluid abgeben kann, das in einem Thermospeicher zur Zwischenspeicherung eingeleitet werden kann.

Erfindungsgemäß erfolgt also die Überführung von elektrischer Energie in thermische Energie. Diese Überführung kann mittels an vielen Orten bereits vorhandener Gaskraftwerkstechnologie erreicht werden, indem nämlich der Generator, der zur elektrischen Stromerzeugung vorgesehen ist, insoweit angepasst wird, dass er auch als Motor zur Erzeugung eines thermisch erwärmten Gasstroms betrieben werden kann.

Da der Generator in Bezug zu einem Motor lediglich auf der Umkehrung eines technischen Prinzips basiert, sind zur Anpassung des Generators nur verhältnismäßig kleine und kostengünstige Änderungen vorzunehmen, die es erlauben, den Generator auch als Motor zu betreiben. Hierbei ist etwa das Schutzkonzept des Generators zu überarbeiten. Zudem werden vielfach Generatoren für Gasturbinen bereits so gebaut, dass sie in der Anlaufphase bis zur Erreichung einer gewünschten Mindestdrehzahl als Motor betrieben werden können. Ein solcher Betrieb als Motor gewährleistet jedoch nur einen asynchronen Betrieb, welcher auch nicht dafür vorgesehen ist, hohe Leistungsaufnahmen zum Erreichen der Nenndrehzahl der Gasturbine bereit zu stellen. Die Bereitstellung eines thermisch erwärmten Gasstroms ist bei herkömmlichen Leistungsaufnahmen ohne Zuheizen durch den Motor kaum möglich, da bei einem herkömmlichen Betrieb der Gasturbine eine Zündung von Brennstoff in der Brennkammerstufe vor Erreichung der Nenndrehzahl zusätzlich Verbrennungsleistung liefert, also dafür sorgt, dass ein erwünschter Verdichtermassenstrom erreicht werden kann. Der Motor hat also in diesem regulären Betrieb nicht die gesamte Leistung zur Verfügung zu stellen, um die Gasturbine auf Nenndrehzahl zu bringen. Wird jedoch die Verbrennungsleistung nicht oder nicht in dem Maße wie beim herkömmlichen Betrieb zur Verfügung gestellt, erfordert dies eine zusätzliche Leistungsaufnahme durch den Motor, zu welcher herkömmliche Generatoren, die als Motoren betrieben werden, nicht ausgelegt sind.

Bei Betrieb des Generators als Motor erfolgt die Verwendung von elektrischer Energie, die aus dem öffentlichen Stromversorgungsnetz entnommen werden kann, zum rotatorischen Betrieb der Achse. Diese treibt wiederum die von der Gasturbine umfasste Turbinenstufe sowie Kompressorstufe an und sorgt somit für einen Gasstromfluss durch die Gasturbine, der dem Fluss bei einem Strom erzeugenden Betrieb der Gasturbine gleichgerichtet ist. Anders als beim Strom erzeugenden Betrieb der Gasturbine soll jedoch bei dem erfindungsgemäßen Betrieb keine Stromerzeugung erfolgen, sondern lediglich die Umwandlung von elektrischer Energie in eine geeignete speicherbare Form der Energie. Strom wird also verbraucht. Zudem wirkt der Stromverbrauch aufgrund der großen Massenträgheit von Achse, Kompressor und Turbine der Gasturbine Frequenz stabilisierend auf die Netzfrequenz des öffentlichen Versorgungsnetzes. Insofern können geringere Netzschwankungen auch auf geeignete Weise ausgeglichen werden während dem öffentlichen Stromversorgungsnetz gleichzeitig elektrische Energie entzogen wird.

Bei erfindungsgemäßem Betrieb des Generators zur Erzeugung von thermischer Energie mittels der Gasturbine wird zunächst Luft aus der Umgebung, in die Kompressorstufe eingesaugt, um diese Luft zu verdichten und damit wenigstens teilweise eine adiabatische Erwärmung dieser so verdichteten Luft zu erreichen. Folglich tritt bei dem erfindungsgemäßen Betrieb des Generators als Motor relativ wärmere Luft aus der Kompressorstufe aus, und passiert die Brennkammerstufe sowie die Turbinenstufe. Bei Austritt aus der Turbinenstufe kann das Gas in geeigneter Weise abgeleitet werden, wobei seine thermische Energie nach geeigneter Führung durch thermische Wechselwirkung in einem ersten Wärmetauscher auf ein Wärmetauscherfluid übertragen werden kann. Dieses Wärmetauscherfluid kann zur weiteren, zeitlich nachfolgenden Verwendung, etwa zur Rückverstromung bei höheren Stromnachfragen in dem öffentlichen Stromversorgungsnetz, in einem Thermospeicher bevorratet werden. Alternativ kann das Gaskraftwerk auch so ausgebildet sein, dass das Wärmetauscherfluid seine thermische Energie auf ein Wärmespeicherfluid in einem zweiten Wärmetauscher übertragen kann, welches dann ebenfalls in einem Thermospeicher bevorratet wird. Damit steht die thermische Energie des Wärmetauscherfluids und/oder des Wärmespeicherfluids auch zu einem späteren Zeitpunkt noch für weitere thermische Anwendungen zur Verfügung. Besonders vorteilhaft erfolgen solche Anwendungen zu Zeiten, zu welchen Strom aus den öffentlichen Stromversorgungsnetzen relativ teuer ist.

Hierbei ist darauf hinzuweisen, dass der Thermospeicher ein Bauteil ist, welches nicht von einer bereits bestehenden Dampferzeugereinheit umfasst ist, die zur Dampferzeugung für den Betrieb einer Dampfturbine vorgesehen ist. Der Thermospeicher ist vielmehr ein zusätzliches Bauteil, welches von einem herkömmlichen Gas-und-Dampfkraftwerk nicht umfasst ist.

Weiter ist darauf hinzuweisen, dass die Abführung der erwärmten Luft aus der Turbinenstufe erfolgt und keine baulichen Veränderungen an der Gasturbine selbst erfordert. Insbesondere sind keine zusätzlichen Auslässe vorzusehen, über welche die durch Kompression erwärmte Luft abgeleitet werden müsste.

Vorliegend soll der Begriff des Gaskraftwerks in einer breiten Bedeutungsform verstanden werden. Insbesondere sind unter einem Gaskraftwerk auch ein kombiniertes Gas- und Dampfkraftwerk zu verstehen, bei welchen eine Dampfturbine mittels der thermischen Abwärme des Rauchgases einer Gasturbine betreibt. Zudem ist auch ein Gaskraftwerk davon umfasst, welches ein externes Dampfkraftwerk mit thermischer Wärme versorgt. Ebenso ist unter ein Gaskraftwerk eine großtechnische prozesstechnische Anwendung zu fassen, welche eine Gasturbine zur Stromerzeugung aufweist.

Gemäß einer besonders bevorzugten Ausführungsform des erfindungsgemäßen Verfahrens zum Betrieb eines Gaskraftwerks kann dieses vorsehen, dass der Generator mittels Überschussstrom als Motor betrieben wird. Da Überschussstrom mitunter kostenfrei oder sogar gegen Vergütung aus dem öffentlichen Stromnetz entnommen werden kann, kann der Betrieb des Generators als Motor sehr kostengünstig erfolgen. Da überdies die Gasturbine zu Zeiten, zu welchen Überschussstrom in den öffentlichen Stromnetzen zur Verfügung steht, typischerweise nicht zur Stromerzeugung eingesetzt wird, eignet sich der ausführungsgemäße Betrieb des Generators als Motor aus wirtschaftlichen Gesichtspunkten besonders.

Gemäß einer weiteren bevorzugten Ausführungsform des erfindungsgemäßen Verfahrens wird der Generator als Motor bei variabler Drehzahl betrieben. Ein solcher Betrieb erlaubt unterschiedliche Mengen an elektrischer Energie aus dem elektrischen Versorgungsnetz zu entnehmen und kann damit in geeigneter Weise der Menge an zur Verfügung stehenden Überschussstrom angepasst werden. Zudem erlaubt ein variabler Betrieb auch die Bereitstellung eines Gasstroms unterschiedlicher Temperaturen durch unterschiedliche Kompressionsleistungen. Nach entsprechender Temperaturwahl kann der Gasstrom folglich hinsichtlich seines Wärmegehalts an die Anforderungen der Anwendung angepasst werden.

Gemäß einer weiteren Ausführungsform des erfindungsgemäßen Verfahrens kann der Generator als Motor derart betrieben werden, dass der Gasstrom wenigstens eine Temperatur von 100 °C, bevorzugt von wenigstens 150 °C und ganz besonders bevorzugt wenigstens 300°C aufweist. Hierbei ist die Motorleistung bzw. die Drehzahl entsprechend an die Temperatur des Gasstromes anzupassen. Da bei höherem Verdichtermassenstrom und somit höherem Verdichterenddruck auch eine verstärkte Kompressionsrate des Motors resultiert, können bei solchen Betriebsbedingungen mitunter höhere Wärmemengen bei höheren Temperaturen auf den Gasstrom übertragen werden. Dies macht sich insbesondere vorteilhaft bei temperaturgesteuerten Verfahren zur Gewinnung von thermischer Energie, bzw. temperaturgesteuerten Schritten solcher Verfahren vorteilhaft bemerkbar. Ist bei Kompression ohne Zufeuerung in der Gasturbine ein Temperaturniveau zwischen 120°C und 200°C zu erwarten, so kann bei geeigneter Zufeuerung auch ein höheres Temperaturniveau von mehr als 200°C, insbesondere auch von mehr als 300°C erreicht werden.

Gemäß einer weiteren bevorzugten Ausführungsform des erfindungsgemäßen Verfahrens ist vorgesehen, dass während des Betriebs des Generators als Motor zur Abgabe thermischer Energie durch den Gasstrom der Gasturbine kein Brennstoff zugeführt wird. Die Übertragung von thermischer Energie auf den Gasstrom in der Gasturbine ist also lediglich auf die Kompression zurück zu führen, welche der Gasstrom in der Kompressorstufe der Gasturbine erfährt. Entsprechend der dort vorherrschenden Kompressionsrate wird das Temperaturniveau des Gasstromes mehr oder minder erhöht. Ausführungsgemäß sind also zur Übertragung von thermischer Energie auf den Gasstrom keine Brennstoffe notwendig, so dass ein besonders kostengünstiges Verfahren resultiert.

Gemäß einer alternativen Ausführungsform des erfindungsgemäßen Verfahrens ist vorgesehen, dass während des Betriebs des Generators als Motor zur Abgabe thermischer Energie durch den Gasstrom der Gasturbine Brennstoff in einer Menge zugeführt wird, welche geringer ist, als eine Menge, die der Gasturbine zugeführt wird bei regulären Strom erzeugendem Berieb, wobei der Brennstoff in der Gasturbine zur Erzeugung von thermischer Energie verbrannt wird. Sollte etwa die Kompressionsrate in der Kompressorstufe nicht ausreichend sein, um ein vorbestimmtes Temperaturniveau des Gasstroms zu erreichen, kann diesem in der Gasturbine ein Brennstoff zugeführt werden, welcher dann durch Zündung verbrannt wird. Die Verbrennung dient der Bereitstellung von thermischer Energie, die auf den Gasstrom übertragen wird.

Die Versorgung des Gasstroms mit einem Brennstoff unterscheidet sich jedoch ausführungsgemäß von einem regulären Betrieb der Gasturbine zur Stromerzeugung dahin gehend, dass die thermische Energie nicht zum Betrieb der Turbinenstufe in der Gasturbine in dem Maße vorgesehen ist, wie bei einem herkömmlichen Betrieb. Die thermische Energie dient einerseits zur Erhöhung des thermischen Energieinhalts des Gasstroms auf ein Niveau, welches den regulären Betrieb der Turbinenstufe normalerweise nicht ermöglicht. Andererseits ermöglicht die Zufeuerung von Brennstoff, etwa Erdgas, in der Brennkammer auch eine Abgabe von thermischer Leistung in der Turbinenstufe, wodurch ein mechanischer Antrieb dieser erreicht wird, der jedoch geringer ist, als bei einem regulären Betrieb. Insofern kann durch eine geeignet eingestellte Zuführung von Brennstoff und Verbrennung desselben der Motor hinsichtlich der Leistungsaufnahme entlastet und sogar gesteuert werden. Hierbei sind geringere Mengen an Brennstoff notwendig als im Vergleich zu einem herkömmlichen Betrieb zur Stromerzeugung. Ausführungsgemäß kann also die Temperatur bzw. der thermische Energieinhalt des Gasstroms vorteilhaft erhöht werden.

Gemäß einer Weiterbildung des Verfahrens kann auch vorgesehen sein, dass der Betrieb des Generators als Motor zur Abgabe thermischer Energie durch den Gasstrom dem Betrieb des Generators in einem regulären Strom erzeugendem Betrieb mit einer zeitlichen Verzögerung von weniger als einer Stunde, bevorzugt von weniger als einer halben Stunde folgt. Hierbei soll der reguläre Betrieb als Volllastbetrieb verstanden werden. Insofern können auch relativ kurze Wechsel zwischen Volllast bei der Stromerzeugung und einem Betrieb zur Stromentnahme aus den Stromversorgungsnetzen unter gleichzeitiger Speicherung von erzeugter thermischer Wärme erreicht werden. Die angegebenen Überbrückungszeiten dienen typischerweise der thermischen Equilibrierung beim Herunterfahren der Gasturbine zur Stromerzeugung. Um insbesondere keine thermischen Schäden an dem Gaskraftwerk durch einen zu schnellen Lastwechsel von beispielsweise Volllast hin zu einem Strom verbrauchenden Betrieb befürchten zu müssen, sind derartige Überbrückungszeiten erforderlich.

Entsprechend einer besonders bevorzugten Ausführungsform der Erfindung erfolgt in einem weiteren Schritt die Entnahme des Wärmetauscherfluids und/oder des Wärmespeicherfluids aus dem Thermospeicher, wobei das entnommene Wärmetauscherfluid und/oder das Wärmespeicherfluid als Prozessdampf oder zur Aufbereitung von Prozessdampf einer Dampfanwendung zugeführt wird. Eine solche Dampfanwendung kann bevorzugt die Versorgung industrieller Prozesse mit Dampf aus einem Wasser-Dampf-Kreislaufes sein, in welchen der Prozessdampf eingebracht wird.

Entsprechend einer anderen bevorzugten Ausführungsform der Erfindung erfolgt in einem weiteren Schritt die Entnahme des Wärmetauscherfluids und/oder des Wärmespeicherfluids aus dem Thermospeicher, wobei das entnommene Wärmetauscherfluid und/oder das Wärmespeicherfluid zur thermischen Konditionierung von Speisewasser in einem Wasser-Dampf-Kreislauf zum Betrieb einer Dampfturbine vorgesehen wird. Hierzu wird das Speisewasser durch Wärmeübertrag zur Vorwärmung und/oder auch zur Verdampfung thermisch konditioniert. Weitere Schritte der thermischen Konditionierung, insbesondere eine Überhitzung eines Dampfes des Speisewassers schließen sich typischerweise nachfolgend daran an. Speisewasser soll hierbei sowohl im Sinne von Kondensatwasser verstanden werden, welches in einem gekoppelten Gas- und Dampfkraftwerksprozess anfällt, wie auch im herkömmlichen Sinne von Speisewasser, welches beispielsweise zur Versorgung eines externen Dampfprozesses vorgesehen ist, in bspw. einem externen Dampfkraftwerk.

Gemäß einer anderen Ausführungsform kann auch vorgesehen sein, dass in einem weiteren Schritt die Entnahme des Wärmetauscherfluids und/oder des Wärmespeicherfluids aus dem Thermospeicher erfolgt, wobei das entnommene Wärmetauscherfluid und/oder das Wärmespeicherfluid zur Konditionierung der Eintrittsluft der Gasturbine bei einem regulären Strom erzeugendem Betrieb vorgesehen wird. Eine solche Konditionierung erfolgt typischerweise mittels eines Eintrittsluftkonditionierers, der im Einsaugbereich der Kompressorstufe angeordnet ist. Durch geeigneten Wärmeübertrag aus dem Wärmetauscherfluid und/oder dem Wärmespeicherfluid kann so die Eintrittsluft erwärmt werden, wodurch insbesondere in Teillast ein effizienter Betrieb der Gasturbine erreicht werden kann.

Gemäß einer bevorzugten Ausführungsform der Erfindung kann vorgesehen sein, dass in einem weiteren Schritt die Entnahme des Wärmetauscherfluids und/oder des Wärmespeicherfluids aus dem Thermospeicher erfolgt, wobei das entnommene Wärmetauscherfluid und/oder das Wärmespeicherfluid in ein Fernwärmnetzwerk eingeleitet wird.

Gemäß einer ersten bevorzugten Ausführungsform des Gaskraftwerks kann vorgesehen sein, dass wenigstens eine Nachwärmestufe umfasst ist, welche stromabwärts in Bezug auf die Gasturbine und stromaufwärts in Bezug auf den ersten Wärmetauscher so mit dem Gasstrom zusammenwirkt, dass zusätzliche thermische Energie dem Gasstrom zugeführt werden kann. Ausführungsgemäß kann also das Temperaturniveau des Gasstroms angehoben werden, indem dem Gasstrom aus der Nachwärmestufe weitere thermische Energie zur Verfügung gestellt wird. Folglich steht in dem ersten Wärmetauscher ein höheres Temperaturniveau und damit eine größere Wärmemenge zur Verfügung, welche auf das Wärmetauscherfluid übertragen werden kann. So können alle weiteren Anwendungen, die der Versorgung mit thermisch konditioniertem Wärmetauscherfluid bedürfen, mit einem höheren Energiegehalt bzw. einer höheren Wärmemenge betrieben werden. Dies kann sich insbesondere auf die Effizienz dieser Anwendungen vorteilhaft auswirken.

Gemäß einer bevorzugten Weiterführung dieser Ausführungsform kann vorgesehen sein, dass die Nachwärmerstufe durch einen Verbrennungsprozess thermische Energie bereit stellt, welcher Verbrennungsprozess insbesondere ein mit Erdgas versorgter Verbrennungsprozess ist. Besonders bevorzugt kann das Erdgas dem Brennstoffreservoir entnommen werden, welches auch zur Versorgung der Gasturbine mit Brennstoff dient. Erdgas ist zudem ein im Vergleich zu bspw. Erdöl relativ umweltfreundlicherer Energieträger, der mit höherem Wirkungsgrad und geringeren Rückständen verbrannt werden kann. Demgemäß stellt sich die vorliegende Ausführungsform als besonders umweltgerecht dar. Zudem ist bei Entnahme aus dem gleichen Brennstoffreservoir, welches auch zur Versorgung der Gastrubine vorgesehen ist, keine weitere Bereitstellung eines Brennstoffes erforderlich.

Weiterhin vorteilhaft kann es sein, wenn der Wärmeübertrag in dem ersten Wärmetauscher ausreichend groß ist, um das Wärmetauscherfluid thermisch in einen Dampf, bzw. ein überhitztes und unter Druck stehendes Fluid zu überführen, wobei das Wärmetauscherfluid bevorzugt in dem Thermospeicher unter Druck bevorratet werden kann. Insbesondere ist das Wärmetauscherfluid Wasser und wird in überhitzter Form bevorratet. Dieses Wasser kann folglich einem Dampfprozess in einem Dampfkraftwerk zur Verwendung zugeführt werden. Alternativ kann auch das Wärmespeicherfluid anstelle des Wärmetauscherfluids diese Aufgabe erfüllen.

Gemäß einer besonders bevorzugten Ausführungsform ist das Wärmetauscherfluid Wasser. Dieses kann bspw. von einem Dampfkreislauf umfasst sein. Ein solcher Dampfkreislauf eignet sich besonders zur elektrischen Stromerzeugung, etwa mittels einer Dampfturbine. Folglich kann die vom Wärmetauscherfluid umfasste thermische Energie einem effizienten Stromerzeugungsprozess zur Verfügung stehen, welcher vor allem auch zeitlich verzögert erzeugten Strom in das öffentliche Stromnetzwerk einspeisen kann. Ebenso eignet sich hierfür das Wärmespeicherfluid anstelle des Wärmetauscherfluids.

Gemäß einer weiteren Ausführungsform der Erfindung können das Wärmetauscherfluid und/oder das Wärmespeicherfluid einem Eintrittsluftkonditionierer zugeführt werden, der zur Vorwärmung der Eintrittsluft ausgebildet ist, welche durch die Gasturbine bei regulärem Strom erzeugendem Betrieb in die Kompressorstufe eingesaugt wird. Durch Vorwärmung der Eintrittsluft kann der Verbrennungsprozess effizienter gestaltet werden. Zudem hat sich gezeigt, dass weniger Verbrennungsrückstände, insbesondere weniger feste Verbrennungsrückstände bei dem Verbrennungsvorgang erzeugt werden. Folglich steigt einerseits die Effizienz des Verbrennungsvorganges andererseits verbessert sich auch der Einfluss des Verbrennungsvorganges auf die Verbrennungsluft hinsichtlich der Rückstände.

Gemäß einer bevorzugten Ausführungsform des erfindungsgemäßen Gaskraftwerks kann das Wärmetauscherfluid und/oder das Wärmespeicherfluid einem dritten Wärmetauscher zugeführt werden, der zur Vorwärmung von Speisewasser in dem Dampfprozess zum Betrieb einer Dampfturbine ausgebildet ist. Demgemäß kann der thermische Energieinhalt des Speisewassers in geeigneter Weise erhöht werden, wodurch der nachfolgende Stromerzeugungsprozess mittels einer Dampfturbine effizienter erfolgen kann.

Gemäß einer weiteren bevorzugten Ausführungsform steht das Wärmetauscherfluid und/oder das Wärmespeicherfluid mit einem Fernwärmenetz in Thermal- und/oder Fluidverbindung. Folglich kann die mittels der Gasturbine bereitgestellte Wärme verlustarm direkt zum Endverbraucher geleitet werden.

Nachfolgend soll die Erfindung anhand einiger Figuren beispielhaft dargestellt werden. Hierbei sei darauf hingewiesen, dass die Figuren lediglich schematisch zu verstehen sind und keine Einschränkung hinsichtlich einer Konkretisierung der gezeigten Ausführungsform darstellen. Zudem werden die einzelnen Merkmale, die in den Figuren dargestellt sind, für sich alleine wie auch in Verbindung mit den anderen in den Figuren dargestellten Merkmalen beansprucht.

Hierbei zeigen:
- Fig. 1: eine erste Ausführungsform des erfindungsgemäßen Gaskraftwerks in einer schematischen Ansicht;
- Fig. 2: eine zweite Ausführungsform des erfindungsgemäßen Gaskraftwerks in einer schematischen Darstellung;
- Fig. 3: eine dritte Ausführungsform des erfindungsgemäßen Gaskraftwerks, ebenfalls in einer schematischen Darstellung;
- Fig. 4: ein Flussdiagramm zur Darstellung einer Ausführungsform des erfindungsgemäßen Verfahrens;

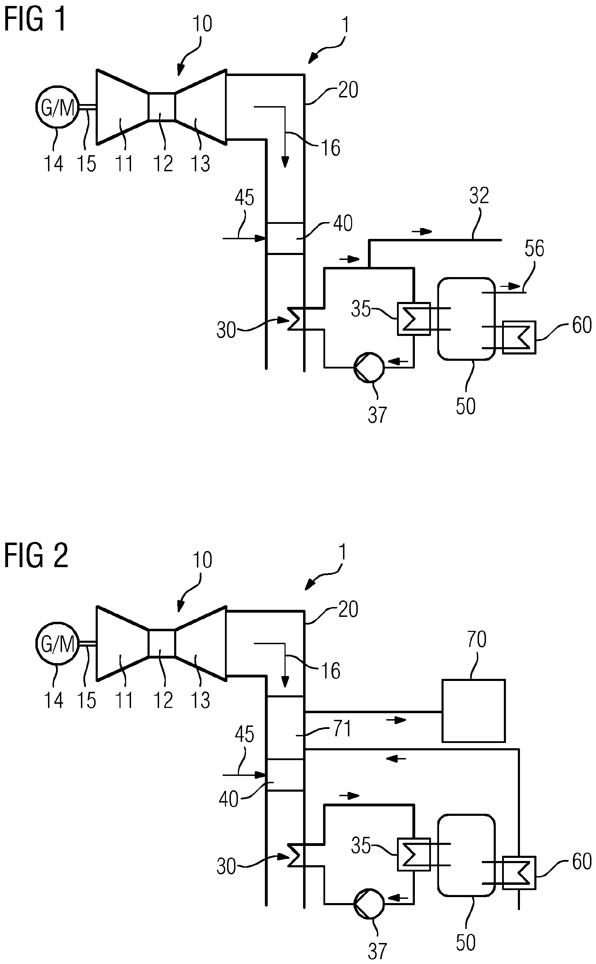

Fig. 1 zeigt eine erste Ausführungsform des erfindungsgemäßen Gaskraftwerks 1 in einer schematischen Darstellung. Hierbei umfasst das Gaskraftwerk 1 eine Gasturbine 10, welche eine Kompressorstufe 11, eine Brennkammerstufe 12 sowie eine Turbinenstufe 13 aufweist. Die Gasturbine 10 ist über eine Achse 15 mit einem Generator 14 verbunden. Der Generator 14 ist erfindungsgemäß geeignet, auch als Motor betrieben zu werden. Demgemäß kann die Gasturbine 10 in einem regulären Strom erzeugenden Verfahren wie auch in einem lediglich zur Bereitstellung thermischer Wärme vorgesehenen Verfahren, welches elektrischer Energie verbraucht, betrieben werden.

In dem lediglich zur Bereitstellung thermischer Wärme unter Verbrauch von elektrischer Energie geeigneten Verfahren wird der Generator 14 als Motor betrieben, wobei Eintrittsluft in die Kompressorstufe 11 eingesogen wird und einen Gasstrom 16 ausbildet, der durch die Brennkammerstufe 12 hindurch tritt, ohne jedoch mit einem Brennstoff in einer Menge vermischt zu werden, wie sie dem Gasstrom 16 bei regulärem Betrieb zugemischt würde. Insbesondere wird dem Gasstrom 16 kein Brennstoff zugemischt. Der Gasstrom 16 nimmt aufgrund der Kompression in der Kompressorstufe 11 durch fluiddynamische Verdichtung an Wärmegehalt zu. Der Gasstrom 16 tritt weiterhin in die Turbinenstufe 13 ein und durch diese hindurch. Dabei kann der Gasstrom 16 Energie an die Turbine abgeben, jedoch in deutlich geringerem Umfang als es der Fall bei einem regulärem zur Stromerzeugung vorgesehen Verfahren der Fall wäre. Typischerweise ändert der Gasstrom sein Temperaturniveau kaum durch den Energieverlust an die Turbine. Nach dem Austritt aus der Turbinenstufe 13 strömt der Gasstrom 16 in eine Gasleitungsvorrichtung 20 ein und wird in geeigneter Weise zu einem ersten Wärmetauscher 30 geführt, an welchem die thermische Energie aus dem Gasstrom 16 an ein Wärmetauscherfluid 31 (vorliegend nicht gezeigt) abgegeben wird.

Um das Temperaturniveau des Gasstroms 16 bei Bedarf zu erhöhen, kann zwischen der Gasturbine 10 und dem ersten Wärmetauscher 30 eine Nachwärmerstufe 40 vorgesehen sein, die zur Bereitstellung zusätzlicher thermischer Energie an den Gasstrom 16 geeignet ist. Gemäß einer bevorzugten Ausführungsform kann die Nachwärmerstufe 40 durch eine Erdgaszuleitung 45 mit Erdgas als Brennstoff versorgt werden, wobei durch einen Verbrennungsprozess die Verbrennungswärme durch die Nachwärmerstufe 40 an den Gasstrom 16 abgegeben werden kann. Folglich kann gewährleistet werden, dass der erste Wärmetauscher 30 mit ausreichender thermischer Energie versorgt wird. Ausführungsgemäß steht der erste Wärmetauscher 30 mit einem Kreislauf des Wärmetauscherfluids 31 in thermischer Wirkverbindung.

Je nach Temperaturniveau des Gasstroms 16 können Temperaturen erreicht werden, die einen Phasenübergang des Wärmetauscherfluids hervorrufen. Insbesondere kann bei ausreichender Wärmezufuhr an das Wärmetauscherfluid dieses in eine dampf- bzw. gasförmige Phase überführt werden. Ebenso kann es auch unter Druck stehend überhitzt werden, wobei die flüssige Phase beibehalten wird. Das Wärmetauscherfluid kann ausführungsgemäß als Dampf über eine Dampfleitung 32 aus dem Kreislauf ausgekoppelt werden, um es weiteren dampftechnischen Anwendungen zur Verfügung zu stellen.

Weiter ist es vorgesehen, die thermische Energie des Wärmetauscherfluids aus dem durch eine Pumpe 37 fluiddynamisch angetriebenen Wärmekreislauf in einem zweiten Wärmetauscher 35 auf ein Wärmespeicherfluid zu übertragen, welches etwa in einem Thermospeicher 50 zwischengespeichert werden kann. So nimmt das Wärmespeicherfluid in dem zweiten Wärmetauscher 35 thermische Energie auf, um in dem Thermospeicher 50 für eine spätere Anwendung bevorratet zu werden. Entsprechend einer alternativen Ausführungsform kann auch das Wärmetauscherfluid in dem Thermospeicher 50 für eine spätere Anwendung bevorratet zu werden.

Bei Bedarf kann bspw. das Wärmespeicherfluid wieder aus dem Thermospeicher 50 über eine Entnahmeleitung 56 entnommen werden. Bevorzugt kann bspw. das Wärmespeicherfluid zur Versorgung einer Fernwärmeleitung entnommen werden. Alternativ zu einer direkten Entnahme des Wärmespeicherfluids aus dem Thermospeicher 50 kann auch eine Entnahme thermischer Energie mittels eines dritten Wärmetauschers 60 erreicht werden. Der Wärmetauscher 60 ist hierbei für vorbestimmte thermische Anwendungen anpassbar. Solche können bspw. die Vorwärmung von Speisewasser bzw. die Vorwärmung von Prozessflüssigkeit wie auch die Vorwärmung von Prozessgasen sein.

Fig. 2 zeigt eine weitere Ausführungsform des erfindungsgemäßen Gaskraftwerks 1, die sich von der in Fig. 1 gezeigten Ausführungsform lediglich dahingehend unterscheidet, dass die Gasleitungsvorrichtung 20 eine Dampferzeugereinheit 71 aufweist. Die Dampferzeugereinheit 71 ist bevorzugt zwischen der Nachwärmerstufe 40 und der Gasturbine 10 in der Gasleitungsvorrichtung 20 vorgesehen. Die Dampferzeugereinheit 71 wird während des regulären Strom erzeugenden Betriebs der Gasturbine 10 zur Dampferzeugung benutzt, wobei der so erzeugte Dampf einer Dampfturbine 70 zum Antrieb zugeleitet werden kann. Eine ausführungsgemäße Verbesserung ist mit der Bereitstellung von thermischer Energie über den dritten Wärmetauscher 60 erreicht, welcher aus dem Thermospeicher 50 die darin bevorratet Energie des Wärmespeicherfluids entnimmt. Damit kann der Dampferzeugereinheit 71 Wärme bzw. vorgewärmtes Fluid (bspw. Wasser) zugeführt werden, weshalb folglich in der Dampferzeugereinheit 71 ein geringerer Wärmeübertag erforderlich wird, um auf ein vorbestimmtes Temperaturniveau angehoben zu werden, als bei einem Gaskraftwerk, welches die ausführungsgemäße Vorwärmung nicht vorsieht. Die Dampferzeugereinheit 71 kann hierbei weitere Vorwärmerstufen aufweisen oder aber auch lediglich einen Dampferzeuger bzw. Überhitzer.

Insbesondere vorteilhaft stellt sich die Vorwärmung des der Dampferzeugereinheit 71 zugeführten Fluids (bspw. Wasser) dann dar, wenn die Gasturbine 10 aus einem Ruhezustand in einen Betriebszustand überführt wird. Ist das in der Dampferzeugereinheit 71 vorgesehene Fluid nämlich bereits auf einem höheren Temperaturniveau zum Zeitpunkt des Anlaufens der Gasturbine, wird der Punkt der Dampferzeugung zu einem relativ früheren Zeitpunkt eintreten. Demgemäß kann auch die Dampfturbine 70 zu einem relativ früheren Zeitpunkt zur Stromerzeugung eingesetzt werden. Folglich können also die Anfahrzeiten für den Betrieb der Dampfturbine 70 verringert werden.

Gemäß einer alternativen, in Fig. 2 jedoch nicht gezeigten Ausführungsform, kann die Übertragung von thermischer Energie auf das der Dampferzeugereinheit 71 zugeleiteten Fluids auch mittels des zweiten Wärmetauschers 35 erfolgen.

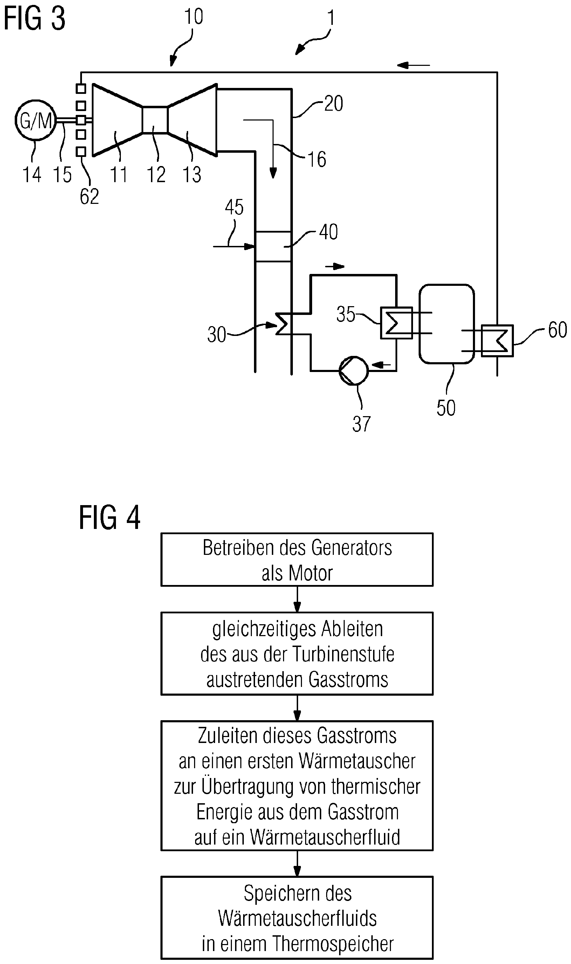

Fig. 3 zeigt eine weitere Ausführungsform des erfindungsgemäßen Gaskraftwerks 1, die sich von der in Fig. 1 gezeigten Ausführungsform lediglich dahingehend unterscheidet, dass mittels des dritten Wärmetauschers 60 thermische Energie ausdem Thermospeicher 50 entnommen werden kann, wobei diese Energie einem Eintrittsluftkonditionierer 62 zugeleitet wird, der dazu ausgebildet ist, die Eintrittsluft, welche bei einem regulären Strom erzeugendem Betrieb der Gasturbine 10 in die Kompressorstufe 11 eingesaugt wird, vorzuwärmen.

Fig. 4 zeigt ein Flussdiagramm zur Darstellung einer Ausführungsform des erfindungsgemäßen Verfahrens. Hierbei wird in einem ersten Schritt der Generator 10 als Motor betrieben, um einen Gasstrom 16 auszubilden, der ein im Vergleich zur Umgebungstemperatur erhöhtes Temperaturniveau aufweist. Gleichzeitig wird in einem zweiten Schritt der aus der Turbinenstufe 13 austretende Gasstrom 16, welcher ein erhöhtes thermisches Energieniveau aufweist, abgeleitet, d.h. in einer gewünschten Richtung geführt. Anschließend wird der Gasstrom 16 einem ersten Wärmetauscher 30 zugeleitet zur Übertragung wenigstens eines Teiles der thermischen Energie auf ein Wärmetauscherfluid. Diese kann anschließend ausführungsgemäß zum späteren Gebrauch in einem Thermospeicher 50 zwischengespeichert werden. Alternativ kann aber auch die thermische Energie auf ein nicht weiter gezeigtes Wärmespeicherfluid in einem zweiten Wärmetauscher 35 überführt werden, welches ebenso zur Zwischenspeicherung in einem Thermospeicher 50 vorgesehen sein kann.

Weitere Ausführungsformen der Erfindung ergeben sich aus den Unteransprüchen.

## Patentansprüche

1. Verfahren zum Betrieb eines Gaskraftwerks (1), umfassend eine Gasturbine (10), welche eine Kompressorstufe (11) sowie eine Turbinenstufe (13) aufweist, und mit einem Generator (14) über eine Achse (15) verbunden ist, wobei der Generator (14) dazu ausgebildet ist, auch als Motor betrieben zu werden, welches Verfahren folgende Schritte umfasst:
- Betreiben des Generators (14) als Motor zum rotatorischen Betrieb der Achse (15);
- gleichzeitiges Ableiten des aus der Turbinenstufe (11) austretenden Gasstroms (16) und
- Zuleiten dieses Gasstroms (16) an einen ersten Wärmetauscher (30) zur Übertragung von thermischer Energie aus dem Gasstrom (16) auf ein Wärmetauscherfluid;
- Zuführen des Wärmetauscherfluids an einen Thermospeicher (50).

2. Verfahren zum Betrieb eines Gaskraftwerks (1), umfassend eine Gasturbine (10), welche eine Kompressorstufe (11) sowie eine Turbinenstufe (13) aufweist, und mit einem Generator (14) über eine Achse (15) verbunden ist, wobei der Generator (14) dazu ausgebildet ist, auch als Motor betrieben zu werden, welches Verfahren folgende Schritte umfasst:
- Betreiben des Generators (14) als Motor zum rotatorischen Betrieb der Achse (15);
- gleichzeitiges Ableiten des aus der Turbinenstufe (11) austretenden Gasstroms (16) und
- Zuleiten dieses Gasstroms (16) an einen ersten Wärmetauscher (30) zur Übertragung von thermischer Energie aus dem Gasstrom (16) auf ein Wärmetauscherfluid;
- Übertragen von thermischer Energie des Wärmetauscherfluids an ein Wärmespeicherfluid (36), welches Wärmespeicherfluid (36) in einem weiteren Schritt einem Thermospeicher (50) zugeführt wird.

3. Verfahren gemäß Anspruch 1 oder 2,
**dadurch gekennzeichnet, dass**
der Generator (14) mittels Überschussstrom als Motor betrieben wird.

4. Verfahren gemäß einem der vorhergehenden Ansprüche,
**dadurch gekennzeichnet, dass**
der Generator (14) als Motor bei variabler Drehzahl betrieben wird.

5. Verfahren gemäß einem der vorhergehenden Ansprüche,
**dadurch gekennzeichnet, dass**
der Generator (14) als Motor derart betrieben wird, dass der Gasstrom (16) wenigstens eine Temperatur von 100 °C, bevorzugt von wenigstens 150 °C und ganz besonders bevorzugt wenigstens 300°C aufweist.

6. Verfahren gemäß einem der vorhergehenden Ansprüche,
**dadurch gekennzeichnet, dass**
während des Betriebs des Generators (14) als Motor zur Abgabe thermischer Energie durch den Gasstrom (16) der Gasturbine (10) kein Brennstoff zugeführt wird.

7. Verfahren gemäß einem der Ansprüche 1 bis 5,
**dadurch gekennzeichnet, dass**
während des Betriebs des Generators (14) als Motor zur Abgabe thermischer Energie durch den Gasstrom (16) der Gasturbine (10) Brennstoff in einer Menge zugeführt wird, welche geringer ist, als eine Menge, die der Gasturbine (10) zugeführt wird bei regulärem Strom erzeugendem Berieb, wobei der Brennstoff in der Gasturbine (10) zur Erzeugung von thermischer Energie verbrannt wird.

8. Verfahren gemäß einem der vorhergehenden Ansprüche,
**dadurch gekennzeichnet, dass**
der Betrieb des Generators (14) als Motor zur Abgabe thermischer Energie durch den Gasstrom (16) dem Betrieb des Generators (14) in einem regulären Strom erzeugendem Betrieb mit einer zeitlichen Verzögerung von weniger als einer Stunde, bevorzugt von weniger als einer halben Stunde folgt.

9. Verfahren gemäß einem der vorhergehenden Ansprüche,
**dadurch gekennzeichnet, dass**
in einem weiteren Schritt die Entnahme des Wärmetauscherfluids und/oder des Wärmespeicherfluids aus dem Thermospeicher (50) erfolgt, wobei das entnommene Wärmetauscherfluid und/oder das Wärmespeicherfluid als Prozessdampf oder zur Aufbereitung von Prozessdampf einer Dampfanwendung zugeführt wird.

10. Verfahren gemäß einem der vorhergehenden Ansprüche,
**dadurch gekennzeichnet, dass**
in einem weiteren Schritt die Entnahme des Wärmetauscherfluids und/oder des Wärmespeicherfluids aus dem Thermospeicher (50) erfolgt, wobei das entnommene Wärmetauscherfluid und/oder das Wärmespeicherfluid zur thermischen Konditionierung von Speisewasser in einem Wasser-Dampf-Kreislauf zum Betrieb einer Dampfturbine (70) vorgesehen wird.

11. Verfahren gemäß einem der vorhergehenden Ansprüche,
**dadurch gekennzeichnet, dass**
in einem weiteren Schritt die Entnahme des Wärmetauscherfluids und/oder des Wärmespeicherfluids aus dem Thermospeicher (50) erfolgt, wobei das entnommene Wärmetauscherfluid und/oder das Wärmespeicherfluid zur thermischen Konditionierung der Eintrittsluft der Gasturbine (10) bei einem regulären Strom erzeugendem Betrieb vorgesehen wird.

12. Verfahren gemäß einem der vorhergehenden Ansprüche,
**dadurch gekennzeichnet, dass**
in einem weiteren Schritt die Entnahme des Wärmetauscherfluids und/oder des Wärmespeicherfluids aus dem Thermospeicher (50) erfolgt, wobei das entnommene Wärmetauscherfluid und/oder das Wärmespeicherfluid in ein Fernwärmnetzwerk eingeleitet wird.

13. Gaskraftwerk (1), umfassend einen Generator (14) und eine Gasturbine (10), welche eine Kompressorstufe (11) sowie eine Turbinenstufe (13) aufweist, und mit dem Generator (14) über eine Achse (15) verbunden ist, wobei der Generator (14) dazu ausgebildet ist, auch als Motor betrieben zu werden,
weiterhin umfassend einen ersten Wärmetauscher (30)und einen Thermospeicher (50) und **dadurch gekennzeichnet, dass** eine Gasleitungsvorrichtung (20) umfasst ist, welche mit der Turbinenstufe (13) derart zusammen wirkt, dass ein Gasstrom (16), welcher aus der Turbinenstufe (13) austritt, abgeleitet und dem einem ersten Wärmetauscher (30) zugeleitet wird, wobei der Wärmetauscher (30) dazu ausgebildet ist, thermische Energie aus dem Gasstrom (16) zu entnehmen und auf ein Wärmetauscherfluid zu übertragen, welches in dem Thermospeicher (50) zur Zwischenspeicherung eingeleitet wird.

14. Gaskraftwerk (1), umfassend einen Generator (14) und eine Gasturbine (10), welche eine Kompressorstufe (11) sowie eine Turbinenstufe (13) aufweist, und mit dem Generator (14) über eine Achse (15) verbunden ist, wobei der Generator (14) dazu ausgebildet ist, auch als Motor betrieben zu werden,
weiterhin umfassend einen ersten Wärmetauscher (30), einen zweiten Wärmetauscher (35) und einen Thermospeicher (50) und **dadurch gekennzeichnet, dass** eine Gasleitungsvorrichtung (20) umfasst ist, welche mit der Turbinenstufe (13) derart zusammen wirkt, dass ein Gasstrom (16), welcher aus der Turbinenstufe (13) austritt, abgeleitet und dem ersten Wärmetauscher (30) zugeleitet wird, wobei der Wärmetauscher (30) dazu ausgebildet ist, thermische Energie aus dem Gasstrom (16) zu entnehmen und auf ein Wärmetauscherfluid zu übertragen, welches in dem zweiten Wärmetauscher (35) wenigstens einen Teil der thermischen Energie an ein Wärmespeicherfluid abgeben kann, das in dem Thermospeicher (50) zur Zwischenspeicherung eingeleitet wird.

15. Gaskraftwerk gemäß einem der Ansprüche 13 oder 14,
**dadurch gekennzeichnet, dass**
wenigstens eine Nachwärmerstufe (40) umfasst ist, welche stromabwärts in Bezug auf die Gasturbine (10) und stromaufwärts in Bezug auf den ersten Wärmetauscher (30) so mit dem Gasstrom (16) zusammen wirkt, dass zusätzliche thermische Energie dem Gasstrom (16) zugeführt werden kann.

16. Gaskraftwerk gemäß Anspruch 15,
**dadurch gekennzeichnet, dass**
die Nachwärmerstufe (40) durch einen Verbrennungsprozess thermische Energie bereitstellt, welcher Verbrennungsprozess insbesondere ein mit Erdgas versorgter Verbrennungsprozess ist.

17. Gaskraftwerk gemäß einem der Ansprüche 13 bis 16,
**dadurch gekennzeichnet, dass**
das Wärmetauscherfluid Wasser ist.

## Claims

1. Method for operating a gas power plant (1), comprising a gas turbine (10), which has a compressor stage (11) and a turbine stage (13), and is connected to a generator (14) via a shaft (15), wherein the generator (14) is designed to also be operated as a motor, which method comprises the following steps:
- operating the generator (14) as a motor for the rotational operation of the shaft (15);
- simultaneous diverting of the gas flow (16) which discharges from the turbin stage (11) and
- feeding this gas flow (16) to a first heat exchanger (30) for transferring thermal energy from the gas flow (16) to a heat exchanger fluid;
- feeding the heat exchanger fluid to a thermal store (50).

2. Method for operating a gas power plant (1), comprising a gas turbine (10), which has a compressor stage (11) and a turbine stage (13), and is connected to a generator (14) via a shaft (15), wherein the generator (14) is designed to also be operated as a motor, which method comprises the following steps:
- operating the generator (14) as a motor for the rotational operation of the shaft (15);
- simultaneous diverting of the gas flow (16) which discharges from the turbine stage (11) and
- feeding this gas flow (16) to a first heat exchanger (30) for transferring thermal energy from the gas flow (16) to to a heat exchanger fluid;
- transferring thermal energy of the heat exchanger fluid to a thermal store fluid (36), which thermal store fluid (36) is fed to a thermal store (50) in a further step.

3. Method according to Claim 1 or 2,
**characterized in that**
the generator (14) is operated as a motor by means of surplus power.

4. Method according to one of the preceding claims,
**characterized in that**
the generator (14) is operated as a motor at variable rotational speed.

5. Method according to one of the preceding claims,
**characterized in that**
the generator (14) is operated as a motor in such a way that the gas flow (16) has at least a temperature of 100°C, preferably of least 150°C and most especially preferably of at least 300°C.

6. Method according to one of the preceding claims,
**characterized in that**
during operation of the generator (14) as a motor for releasing thermal energy by means of the gas flow (16) no fuel is fed to the gas turbine (10).

7. Method according to one of Claims 1 to 5,
**characterized in that**
during operation of the generator (14) as a motor for releasing thermal energy by means of the gas flow (16) fuel is fed to the gas turbine (10) in a quantity which is lower than a quantity which is fed to the gas turbine (10) during normal power generating operation, wherein the fuel is combusted in the gas turbine (10) for generating thermal energy.

8. Method according to one of the preceding claims,
**characterized in that** the operation of the generator (14) as a motor for releasing thermal energy by means of the gas flow (16) follows the operation of the generator (14) in a normal power generating operation with a time delay of less than one hour, preferably of less than half an hour.

9. Method according to one of the preceding claims,
**characterized in that**
in a further step the extraction of the heat exchanger fluid and/or of the thermal store fluid from the thermal store (50) is carried out, wherein the extracted heat exchanger fluid and/or the thermal store fluid is fed to a steam application as process steam or for the preparation of process steam.

10. Method according to one of the preceding claims,
**characterized in that**
in a further step the extraction of the heat exchanger fluid and/or of the thermal store fluid from the thermal store (50) is carried out, wherein the extracted heat exchanger fluid and/or the thermal store fluid is provided for thermal conditioning of feed water in a water-steam cycle for operating a steam turbine (70).

11. Method according to one of the preceding claims,
**characterized in that**
in a further step the extraction of the heat exchanger fluid and/or of the thermal store fluid from the thermal store (50) is carried out, wherein the extracted heat exchanger fluid and/or the thermal store fluid is provided for thermal conditioning of intake air of the gas turbine (10) during a normal power generating operation.

12. Method according to one of the preceding claims,
**characterized in that**
in a further step the extraction of the heat exchanger fluid and/or of the thermal store fluid from the thermal store (50) is carried out, wherein the extracted heat exchanger fluid and/or the thermal store fluid is introduced into a district heating network.

13. Gas power plant (1), comprising a generator (14) and a gas turbine (10), which has a compressor stage (11) and a turbine stage (13), and is connected to the generator (14) via a shaft (15), wherein the generator (14) is designed to be also operated as a motor, furthermore comprising a first heat exchanger (30) and a thermal store (50) and **characterized in that** it comprises a gas routing device (20) which interacts with the turbine stage (13) in such a way that a gas flow (16), which discharges from the turbine stage (13), is diverted and fed to the first heat exchanger (30), wherein the heat exchanger (30) is designed to extract thermal energy from the gas flow (16) and to transfer it to a heat exchanger fluid which is introduced in the thermal store (50) for temporary storage.

14. Gas power plant (1), comprising a generator (14) and a gas turbine (10), which has a compressor stage (11) and a turbine stage (13), and is connected to the generator (14) via a shaft (15), wherein the generator (14) is designed to be also operated as a motor, furthermore comprising a first heat exchanger (30), a second heat exchanger (35) and a thermal store (50) and **characterized in that** it comprises a gas routing device (20) which interacts with the turbine stage (13) in such a way that a gas flow (16), which discharges from the turbine stage (13), is diverted and fed to the first heat exchanger (30), wherein the heat exchanger (30) is designed to extract thermal energy from the gas flow (16) and to transfer it to a heat exchanger fluid which in the second heat exchanger (35) can release at least some of the thermal energy to a thermal store fluid which is introduced in the thermal store (50) for temporary storage.

15. Gas power plant according to one of Claims 13 and 14,
**characterized in that**
at least one post-heating stage (40) is included and interacts with the gas flow (16) downstream with regard to the gas turbine (10) and upstream with regard to the first heat exchanger (30) so that additional thermal energy can be supplied to the gas flow (16).

16. Gas power plant (1) according to Claim 15,
**characterized in that**
the post-heating stage (40) provides thermal energy by means of a combustion process, which combustion process is especially a combustion process which is suppled with natural gas.

17. Gas power plant (1) according to one of Claims 13 to 16,
**characterized in that**
the heat exchanger fluid is water.

## Revendications

1. Procédé pour faire fonctionner une centrale (1) à gaz, comprenant une turbine (10) à gaz, qui a un étage (11) de compresseur ainsi qu'un étage (13) de turbine, et qui est reliée à une génératrice (14) par un axe (15), la génératrice (14) étant constituée pour fonctionner aussi en moteur, lequel procédé comprend les stades suivant :
- fonctionnement de la génératrice (14) en moteur pour entraîner l'axe (15) en rotation;
- dérivation en même temps du courant (16) de gaz sortant de l'étage (11) de turbine et
- envoi de ce courant (16) de gaz à un premier échangeur de chaleur (30) pour transmettre de l'énergie électrique du courant (16) de gaz à un fluide de l'échangeur de chaleur;
- envoi du fluide de l'échangeur de chaleur à un thermo-accumulateur (50).

2. Procédé pour faire fonctionner une centrale (1) à gaz, comprenant une turbine (10) à gaz, qui a un étage (11) de compresseur ainsi qu'un étage (13) de turbine et qui est reliée à une génératrice (14) par un axe (15), la génératrice (14) étant constituée pour fonctionner aussi en moteur, lequel procédé comprend les stades suivant :
- fonctionnement de la génératrice (14) en moteur pour entraîner l'axe (15) en rotation;
- dérivation en même temps du courant (16) de gaz sortant de l'étage (11) de turbine et
- envoi de ce courant (16) de gaz à un premier échangeur de chaleur (30) pour transmettre de l'énergie thermique du courant (16) de gaz à un fluide de l'échangeur de chaleur;
- transmission de l'énergie thermique du fluide de l'échangeur de chaleur à un fluide (36) d'un accumulateur de chaleur, lequel fluide (36) d'un accumulateur de chaleur est envoyé dans un autre stade à un thermo-accumulateur (50).

3. Procédé suivant la revendication 1 ou 2,
**caractérisé en ce que**
l'on fait fonctionner la génératrice (14) en moteur au moyen d'un courant en excès.

4. Procédé suivant l'une des revendications précédentes,
**caractérisé en ce que**
l'on fait fonctionner la génératrice (14) en moteur à régime variable.

5. Procédé suivant l'une des revendications précédentes,
**caractérisé en ce que**
l'on fait fonctionner la génératrice (14) en moteur de manière à ce que le courant (16) de gaz ait au moins une température de 100°C, de préférence d'au moins 150°C et, d'une manière particulièrement préférée, d'au moins 300°C.

6. Procédé suivant l'une des revendications précédentes,
**caractérisé en ce que**,
pendant le fonctionnement de la génératrice (14) en moteur, on n'envoie pas de combustible à la turbine (10) à gaz pour céder de l'énergie thermique par le courant (16) de gaz.

7. Procédé suivant l'une des revendications 1 à 5,
**caractérisé en ce que**,
pendant le fonctionnement de la génératrice (14) en moteur, on envoie à la turbine (10) à gaz, pour céder de l'énergie thermique par le courant (16) de gaz, du combustible en une quantité qui est plus petite qu'une quantité qui est envoyée à la turbine en gaz lors d'un fonctionnement régulier produisant du courant, le combustible étant brûlé dans la turbine (10) à gaz pour produire de l'énergie thermique.

8. Procédé suivant l'une des revendications précédentes,
**caractérisé en ce que**
le fonctionnement de la génératrice (14) en moteur, pour céder de l'énergie thermique par le courant (16) de gaz, suit le fonctionnement de la génératrice (14) dans un fonctionnement régulier produisant du courant, avec un retard dans le temps de moins d'une heure, de préférence de moins d'une demi-heure.

9. Procédé suivant l'une des revendications précédentes,
**caractérisé en ce que**,
dans un autre stade, a lieu le prélèvement du fluide de l'échangeur de chaleur et/ou du fluide de l'accumulateur de chaleur du thermo-accumulateur (50), le fluide de l'échangeur de chaleur et/ou le fluide de l'accumulateur de chaleur prélevé étant envoyé comme vapeur de processus ou pour la préparation de vapeur de processus à une application de vapeur.

10. Procédé suivant l'une des revendications précédentes,
**caractérisé en ce que**,
dans un autre stade, a lieu le prélèvement du fluide de l'échangeur de chaleur et/ou du fluide de l'accumulateur de chaleur du thermo-accumulateur (50), le fluide de l'échangeur de chaleur et/ou le fluide de l'accumulateur de chaleur prélevé étant prévu pour le conditionnement thermique d'eau d'alimentation d'un circuit eau-vapeur pour le fonctionnement d'une turbine (70) à vapeur.

11. Procédé suivant l'une des revendications précédentes,
**caractérisé en ce que**,
dans un autre stade, a lieu le prélèvement du fluide de l'échangeur de chaleur et/ou du fluide de l'accumulateur de chaleur du thermo-accumulateur (50), le fluide de l'échangeur de chaleur et/ou le fluide de l'accumulateur de chaleur prélevé étant prévu dans un fonctionnement régulier produisant du courant pour le conditionnement thermique de l'air d'entrée dans la turbine (10) à gaz.

12. Procédé suivant l'une des revendications précédentes,
**caractérisé en ce que**,
dans un autre stade, a lieu le prélèvement du fluide de l'échangeur de chaleur et/ou du fluide de l'accumulateur de chaleur du thermo-accumulateur (50), le fluide de l'échangeur de chaleur et/ou le fluide de l'accumulateur de chaleur prélevé étant envoyé dans un réseau de chaleur à grande distance.

13. Centrale (1) à gaz, comprenant une génératrice (14) et une turbine (10) à gaz, laquelle a un étage (11) de compresseur et un étage (13) de turbine et qui est reliée à la génératrice (14) par un axe (15), la génératrice (14) étant constituée pour fonctionner également en moteur,
comprenant, en outre, un premier échangeur de chaleur (30) et un thermo-accumulateur (50) et **caractérisée en ce qu'**il y a un système (20) de conduite de gaz, qui coopère avec l'étage (13) de turbine, de manière à dévier un courant (16) de gaz, qui sort de l'étage (13) de la turbine, et à l'envoyer au premier échangeur de chaleur (30), l'échangeur de chaleur (30) étant constitué pour prélever de l'énergie thermique du courant (16) de gaz et la transmettre à un fluide de l'échangeur de chaleur, qui est envoyé, pour une accumulation intermédiaire, au thermo-accumulateur (50).

14. Centrale (1) à gaz, comprenant une génératrice (14) et une turbine (10) à gaz, laquelle a un étage (11) de compresseur et un étage (13) de turbine et qui est reliée à la génératrice (14) par un axe (15), la génératrice (14) étant constituée pour fonctionner également en moteur,
comprenant, en outre, un premier échangeur de chaleur (30), un deuxième échangeur de chaleur (35) et un thermo-accumulateur (50) et **caractérisée en ce qu'**il y a un système (20) de conduite de gaz, qui coopère avec l'étage (13) de la turbine, de manière à dévier un courant (16) de gaz, qui sort de l'étage (13) de turbine, et à l'envoyer au premier échangeur de chaleur (30), l'échangeur de chaleur (30) étant constitué pour prélever de l'énergie thermique du courant (16) de gaz et la transmettre à un fluide de l'échangeur de chaleur, lequel peut céder, dans le deuxième échangeur de chaleur (35), au moins une partie de l'énergie thermique à un fluide de l'accumulateur de chaleur, qui est envoyé pour l'accumulation intermédiaire dans le termo-accumulateur (50).

15. Centrale à gaz suivant l'une des revendications 13 ou 14, **caractérisée en ce qu'**il y a au moins un étage (40) de réchauffeur, qui, en aval par rapport à la turbine (10) à gaz et en amont par rapport au premier échangeur de chaleur (30), coopère avec le courant (16) de gaz, de manière à pouvoir envoyer de l'énergie thermique supplémentaire au courant (16) de gaz.

16. Centrale à gaz suivant la revendication 5,
**caractérisée en ce que**
l'étage (40) de réchauffeur met à disposition, par une opération de combustion, de l'énergie thermique, laquelle opération de combustion est notamment une opération de combustion alimentée en gaz naturel.

17. Centrale à gaz suivant l'une des revendications 13 à 16,
**caractérisée en ce que** le fluide de l'échangeur de chaleur est de l'eau.
